(19) **Europäisches Patentamt / European Patent Office / Office européen des brevets**

(11) **EP 1 672 810 B1**

(12) **FASCICULE DE BREVET EUROPEEN**

(45) Date de publication et mention
de la délivrance du brevet:
**14.04.2010 Bulletin 2010/15**

(51) Int Cl.:
***H04B 3/54*** *(2006.01)*

(21) Numéro de dépôt: **05360054.0**

(22) Date de dépôt: **14.12.2005**

(54) **Dispositif de commande d'alimentation électrique pour appareils électriques notamment pour candelabres d'eclairage public**

Elektrische Speisungssteuerungsvorrichtung für Elektrogeräte, insbesondere Lampen für eine öffentliche Beleuchtung.

Power supply control device for electric devices, in particular lamps for public lighting

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.12.2004 FR 0413254**

(43) Date de publication de la demande:
**21.06.2006 Bulletin 2006/25**

(73) Titulaires:
• **Gainville, Maurice**
  **1867 Ollon (CH)**
• **Leroy, Sébastien**
  **1124 Gollion (CH)**

(72) Inventeur: **Gainville, Maurice**
**1867 Ollon (CH)**

(74) Mandataire: **Nithardt, Roland**
**Cabinet Nithardt & Associés S.A.**
**14 Boulevard Alfred Wallach**
**B.P. 1445**
**68071 Mulhouse Cedex (FR)**

(56) Documents cités:
**EP-A- 0 758 837    GB-A- 2 335 334**

Printed by Jouve, 75001 PARIS (FR)

**Description**

Domaine technique :

La présente invention concerne un dispositif de commande d'alimentation électrique pour appareils électriques notamment pour candélabres d'éclairage public, comportant au moins une centrale de commande agencée pour alimenter à partir d'un réseau électrique une pluralité d'appareils électriques montés en parallèle sur un circuit de puissance, ce dispositif comportant également au moins une interface de commande associée à chaque appareil électrique.

Technique antérieure :

Un des procédés de commande appliqué à l'alimentation électrique de candélabres d'éclairage public est décrit dans la publication EP-A-1 286 570 et utilise une mémoire dans laquelle sont préenregistrées des données horaires fixes relatives aux heures du coucher et du lever du jour en fonction du jour de l'année et des heures d'hiver et d'été. A la mise en service de l'installation, une correction doit être apportée à ces données horaires en fonction notamment de la latitude et de la longitude de la ville concernée par rapport à une ville de référence. Ce procédé de commande est par conséquent figé et limité à des données horaires préenregistrées, non évolutives et non modifiables aisément.
La publication FR-A-2 851 048 décrit un procédé de communication des candélabres vers une armoire centrale de commande notamment pour signaler leur bon état de fonctionnement ou au contraire une défaillance de fonctionnement via la ligne d'alimentation électrique. Les signaux de communication sont créés par la mise en parallèle d'une résistance avec la lampe du candélabre provoquant une surconsommation de puissance se traduisant par une augmentation de l'intensité efficace du courant alternatif Ce procédé de communication dédie, à chaque candélabre, un intervalle de temps pendant lequel il peut émettre son signal. De ce fait, chaque cycle de vérification nécessite une durée d'intervention importante égale à la somme des n intervalles de temps pour n candélabres alimentés par la même armoire de commande.
La publication EP-A-0 758 837 décrit un procédé de surveillance d'appareils d'éclairage de secours, dans lequel on interrompt temporairement l'alimentation de puissance des appareils pour les synchroniser et effectuer une séquence de tests permettant la vérification de leur bon fonctionnement. Chaque appareil consomme alors un courant dans un intervalle de temps prédéfini. Dans ce procédé, la communication est unilatérale et ne permet pas la programmation d'évènements comme cela est recherché dans l'éclairage public.
La publication GB-A-2 335 334 décrit un autre mode de communication entre une unité centrale de commande et des appareils montés en parallèle, utilisant une trame codée sur une portion de l'alternance positive de l'alimentation de puissance, ce qui limite considérablement les combinaisons et la taille des trames de communication.
Les différents procédés connus ne sont donc pas satisfaisants.

Exposé de l'invention:

La présente invention vise à pallier ces inconvénients en proposant un dispositif de commande de l'alimentation électrique d'appareils électriques qui intègre un système de communication bilatérale simple, économique, convivial, évolutif, paramétrable aisément même à distance et permettant la surveillance systématique des appareils électriques alimentés afin d'assurer une intervention rapide et ciblée en cas de défaillance de fonctionnement d'un des appareils ainsi que la mise à l'heure du dispositif de commande de l'alimentation électrique desdits appareils, le retour d'information de ces appareils, la programmation d'évènements comme la programmation des heures de déclenchement et d'enclenchement, le ou les types de défaut détectés sur la ligne, la programmation de la puissance d'éclairage, etc.
Dans ce but, l'invention concerne un dispositif de commande du genre indiqué en préambule de la revendication 1, caractérisé en ce que chaque interface de commande comporte en outre:

- ♦ un premier module de pilotage agencé pour commander, en fonction d'une première information, au moins un premier interrupteur placé sur le circuit de puissance en position "mode puissance" dans laquelle ledit circuit de puissance alimente en énergie lesdits appareils électriques ou en position "mode communication" dans laquelle ledit circuit de puissance n'alimente pas les appareils électriques et est utilisé pour faire circuler des messages codés autorisant une communication entre la centrale de commande et lesdites interfaces de commande et inversement,
- ♦ un premier module de communication agencé pour émettre des messages codés en direction des interfaces de commande,
- ♦ un premier module de traitement agencé pour réceptionner des messages codés en provenance des interfaces de commande, et
- ♦ un module programmable agencé pour paramétrer au moins lesdits modules de pilotage, de communication et de traitement,

en ce que chaque interface de commande comporte au moins :

- ♦ un second module de traitement agencé pour réceptionner des messages codés en provenance de la centrale de commande et fournir une seconde information,
- ♦ un second module de communication agencé pour émettre des messages codés en direction de la centrale de commande, et
- ♦ un second module de pilotage agencé pour commander, en fonction d'une seconde information issue du second module de traitement, au moins un second interrupteur, placé sur le circuit de puissance en série avec le premier interrupteur, en position fermée correspondant au "mode puissance" dans laquelle l'appareil électrique est alimenté en énergie ou en position ouverte correspondant au "mode communication",

et en ce que les messages codés émis par la centrale de commande sont agencés pour alimenter en énergie lesdites interfaces de commande.

Description sommaire des dessins:

La présente invention et ses avantages apparaîtront mieux dans la description suivante d'un mode de réalisation donné à titre d'exemple non limitatif, en référence aux dessins annexés, dans lesquels :

- la figure 1 représente schématiquement une installation électrique commandée par le dispositif de l'invention,
- la figure 2 est un schéma de principe du dispositif selon l'invention,
- la figure 3 est un exemple de schéma électrique de la centrale de commande selon l'invention, et
- les figures 4 et 5 sont un exemple de schéma électrique de l'interface de commande associée à chaque appareil électrique respectivement en mode réception et en mode émission.

Illustrations de l'invention et meilleure manière de la réaliser :

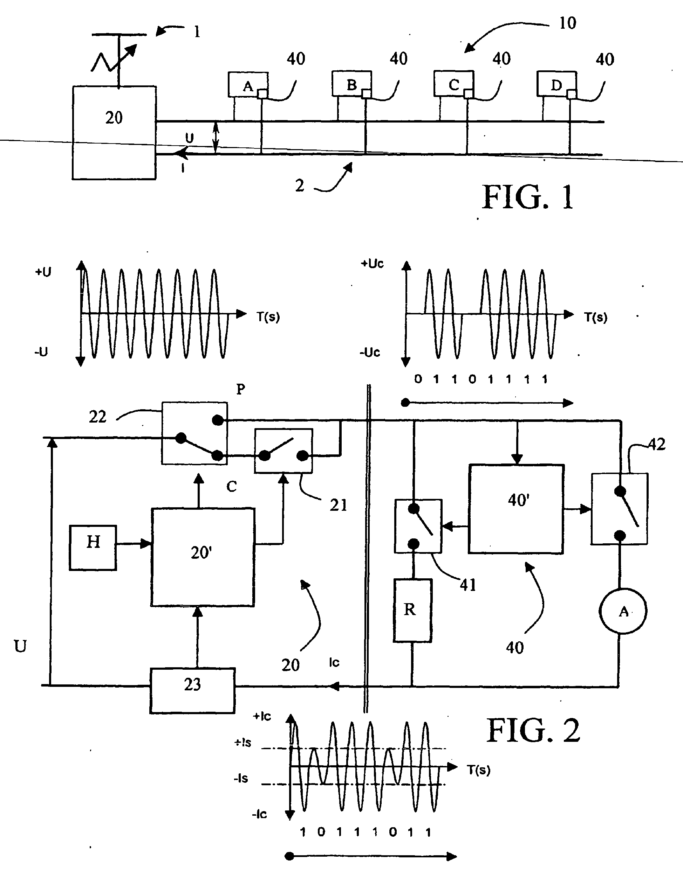

En référence à la figure 1, le dispositif de commande 10 selon l'invention comporte au moins une centrale de commande 20 agencée pour alimenter à partir d'un réseau électrique 1 une pluralités d'appareils électriques A, B, C, D, etc., référencés A par la suite, montés en parallèle sur un circuit de puissance 2. Le réseau électrique 1 peut être le réseau EDF délivrant une tension U de 220 V en courant triphasé avec neutre selon une fréquence de 50 Hz. Bien entendu, tout autre type de réseau peut convenir. Les appareils électriques A peuvent être par exemple des candélabres d'éclairage public, des balises de pistes d'atterrissage dans un aéroport, des pompes de fontaines publiques, des panneaux de diffusion de messages publicitaires ou autres, etc. ainsi que toute autre installation pouvant être éloignée, voire inaccessible comme par exemple des installations immergées.

Le dispositif de commande 10 selon l'invention comporte également une interface de commande 40 associée à chaque appareil électrique A, la centrale de commande 20 et les interfaces de commande 40 étant agencées pour communiquer entre elles comme expliqué en référence à la figure 2.

Le système de communication mis en oeuvre par le dispositif de commande 10 selon l'invention consiste à émettre et à réceptionner des messages codés en système binaire véhiculés par le circuit de puissance 2 à la fréquence du réseau. La fréquence du réseau constitue la base de temps de ce système de communication. Les messages sont formés d'une suite de bits égaux à 0 ou 1. Il faut huit bits pour former un octet ou un caractère, dont un exemple est donné ci-après en illustration de la codification binaire du chiffre décimal 187 :

$$187 \text{ (système décimal)} = 10111011 \text{ (système binaire)}$$

La durée de transmission d'un bit, appelée communément un baud, est égale à une période de la fréquence du réseau électrique, soit 20 ms pour une fréquence de 50 Hz. La valeur 0 ou 1 des bits correspond à l'absence ou à la présence des périodes du réseau, obtenus par l'état ouvert ou fermé d'un interrupteur par exemple. D'autre part, le système de communication a besoin d'énergie électrique pour alimenter les interfaces de commande 40, cette énergie étant fournie par des bits appelés "énergie" égaux à 1 intercalés entre les bits appelés "message" formant le message codé. Enfin, chaque octet est encadré par un bit appelé "start" égal à 0 et un bit appelé "stop" égal à 1.

La transcription du caractère 187 nécessite en conséquence vingt bits :

| Nature du bit | Numéro du bit | Valeur du bit |
|---|---|---|
| Start | 1 | 0 |
| Energie | 2 | 1 |
| Message | 3 | Bit n° 7 = 1 |
| Energie | 4 | 1 |
| Message | 5 | Bit n° 6 = 0 |
| Energie | 6 | 1 |
| Message | 7 | Bit n° 5 = 1 |
| Energie | 8 | 1 |
| Message | 9 | Bit n° 4 = 1 |
| Stop + Energie | 10 | 1 |
| Start | 11 | 0 |
| Energie | 12 | 1 |
| Message | 13 | Bit n° 3 = 1 |
| Energie | 14 | 1 |
| Message | 15 | Bit n° 2 = 0 |
| Energie | 16 | 1 |
| Message | 17 | Bit n° 1 = 1 |
| Energie | 18 | 1 |
| Message | 19 | Bit n° 0 = 1 |
| Stop + Energie | 20 | 1 |

Chaque message codé peut comporter plusieurs caractères, ce qui permet d'envisager un nombre considérable de combinaisons possibles. Les messages codés émis par la centrale de commande 20 sont appelés des "trames de commande" et les messages codés émis par les interfaces de commande 40 sont appelés des "trames de réponse". Les "trames de commande" comportent au moins l'adresse du ou des appareils électriques A à qui est destiné le message codé et un code identifiant un ordre, une donnée, une question, le tout étant défini par un protocole de communication, qui n'est pas détaillé, étant donné que plusieurs protocoles de communication peuvent être développés et installés dans un même dispositif de commande 10, ce protocole de communication faisant l'objet d'un logiciel d'ordinateur.

L'adresse peut désigner soit un seul appareil électrique A, soit un groupe d'appareils électriques A, soit tous les appareils électriques A présents sur le circuit de puissance 2. Dans ce dernier cas, on parle de "broadcast". L'adresse "broadcast" est fixée par le protocole de communication. Chaque appareil électrique A connaît son adresse individuelle et l'adresse de son groupe. Il répond si et seulement s'il reconnaît son adresse individuelle.

La centrale de commande 20 est placée en amont du circuit de puissance 2 et les interfaces de commande 40 associées aux appareils électriques A sont placées en aval du circuit de puissance 2. Dans le protocole de communication, la centrale de commande 20 joue le rôle de "maître", c'est-à-dire qu'elle a l'initiative de tout échange d'information. Les interfaces de commande 40 associées aux appareils électriques A jouent le rôle "d'esclaves", c'est-à-dire qu'elles ne font que répondre aux sollicitations du "maître". Il n'y a pas de communication entre les interfaces de commande 40. De même, il ne peut y avoir qu'une seule interface de commande 40 en train d'émettre vers la centrale de commande 20. Les collisions sont évitées.

La communication dans le sens "maître-esclaves" c'est-à-dire de la centrale de commande 20 vers une ou plusieurs interfaces de commande 40 est réalisée par un signal en tension Uc du réseau obtenue par la commutation d'au moins un interrupteur 21 entre une position ouverte et une position fermée. Pour former un bit égal à 0, l'interrupteur 21 est commuté en position ouverte durant une période du réseau, interrompant le circuit, la tension est nulle. Pour former un bit égal à 1, l'interrupteur 21 est commutée en position fermée durant une période du réseau, rétablissant le circuit, la tension est non nulle. Chaque "trame de commande" doit contenir suffisamment de bits égaux à 1 pour assurer l'alimentation en énergie des interfaces de commande 40. Il s'agit des bits de puissance indiqués dans le tableau ci-dessus.

La communication dans le sens "esclave-maître" c'est-à-dire d'une interface de commande 40 vers la centrale de commande 20 est réalisée par un signal en courant Ic obtenue par la consommation en énergie d'au moins une résistance R. Cette résistance R est placée au sein de l'interface de commande 40. Elle est alimentée par la tension U du réseau via un interrupteur 41 commuté entre une position ouverte et une position fermée. Pour former un bit égal à 0, l'interrupteur 41 est commuté en position ouverte durant une période du réseau, la résistance R est hors circuit et ne consomme aucun courant Ic. Pour former un bit égal à 1, l'interrupteur 41 est commuté en position fermée durant une période du réseau, la résistance R est mis dans le circuit et consomme Ic.

La communication est synchronisée par la centrale de commande 20. Quand elle attend des informations d'une interface de commande 40, elle émet un bit de "start", correspondant à une absence de tension U durant une période du réseau. Le reste du temps, elle fournit la tension U normale du réseau. L'interface de commande 40 questionnée doit émettre ses huit bits sous la forme du courant Ic consommée par la résistance R durant les huit périodes du réseau suivant chaque bit "start" reçu.

Les interfaces de commande 40 ont deux modes de fonctionnement, le "mode puissance" et le "mode communication". Elles sont munies d'un interrupteur 42 qui commande l'élément A consommant une forte puissance, à savoir le foyer lumineux du candélabre dans le cas de l'éclairage public. Dans le "mode communication", l'interrupteur 42 est ouvert et l'élément A ne consomme pas d'énergie. Quand toutes les interfaces de commande 40 présentes sur le circuit de puissance 2 sont en "mode communication", la communication est possible car la puissance transitant sur le circuit de puissance 2 est très faible, seules les interfaces de commande 40 étant alimentées. La résistance R peut être mise en parallèle dans le circuit de puissance 2 par l'interrupteur 41. Les positions ouverte et fermée de cet interrupteur 41 sont commandées par l'interface de commande 40 pour former les bits de communication par un signal en courant Ic à destination de la centrale de commaride 20. Dans le "mode puissance", l'interrupteur 42 est fermé et l'élément A consomme une forte puissance. La communication est alors impossible.

A la mise sous tension U, les interfaces de commande 40 sont initialement en "mode communication". Chaque interface de communication 40 surveille la tension U sur le circuit de puissance 2. Si la tension U est présente durant n périodes consécutives du réseau électrique, l'interface de commande 40 passe en "mode puissance", l'interrupteur 42 se ferme alimentant l'appareil électrique A et rendant la communication impossible. Par exemple, si le nombre n de périodes consécutives est égal à 50 pour un réseau de 50 Hz, les interfaces de commande 40 passent automatiquement en "mode puissance" une seconde après le dernier échange de données. Ce délai d'observation de n périodes permet au circuit de puissance 2 d'alimenter en énergie l'interface de commande 40, le courant I consommé étant très faible. Il est également possible que la centrale de commande 20 envoie un ordre de passer en mode puissance, mais cette solution n'a que peu d'intérêt.

Ces deux modes de fonctionnement, le "mode puissance" et le "mode communication" sont pilotés par la centrale de commande 20 qui comporte au moins un interrupteur 22 à au moins deux positions P et C. En "mode puissance", l'interrupteur 22 est fermé en position P, mettant le circuit de puissance 2 sous la tension U normale du réseau, sans interruption de périodes (voir schéma de la tension U au-dessus à gauche de la figure 2). Les interfaces de commande 40 détectant les n périodes normales basculent en "mode puissance", comme expliqué précédemment. La communication est alors impossible. En "mode communication", l'interrupteur 22 est basculé en position C et met l'interrupteur 21 en série dans le circuit de puissance 2. L'état ouvert et fermé de cet interrupteur 21 est commandé par la centrale de commande 20 pour former les bits de communication par un signal en tension Uc (voir schéma de la tension Uc en haut à droite de la figure 2) à destination du ou des interfaces de commande 40, qui peuvent répondre ou non selon la nature du message par un signal en courant Ic (voir schéma en bas de la figure 2). La commande de l'interrupteur 22 peut être déclenchée par une information horaire provenant d'une horloge H, une information de luminosité ambiante provenant d'un détecteur de luminosité, un ordre préprogrammé ou réceptionné à distance par une communication radio par exemple, ou par toute autre information selon les applications envisagées. Dans l'application de l'éclairage public, l'horloge peut basculer l'interrupteur 22 en position P à l'heure du coucher du soleil et le basculer en position C à l'heure du lever du soleil.

Possibilités d'application industrielle:

Pour mettre en oeuvre ce système de communication, la centrale de commande 20 comporte au moins :

♦ un premier module de pilotage agencé pour commander, en fonction d'une première information, qui peut être une information horaire par exemple, au moins un premier interrupteur 22 placé sur le circuit de puissance 2 en position P "mode puissance" dans laquelle le circuit de puissance 2 alimente en énergie les appareils électriques A ou en position C "mode communication" dans laquelle le circuit de puissance 2 n'alimente pas les appareils électriques A et est utilisé pour faire circuler des messages codés autorisant une communication entre la centrale de commande 20 et les interfaces de commande 40 et inversement,

♦ un premier module de communication agencé pour émettre des messages codés en direction des interfaces de commande 40,

♦ un premier module de traitement agencé pour réceptionner des messages codés en provenance des interfaces de commande 40, et

♦ un module programmable agencé pour paramétrer au moins les modules de pilotage, de communication et de traitement.

Une partie de ces modules est par exemple constituée d'un microcontrôleur 20'. Ce microcontrôleur 20' peut bien entendu avoir d'autres fonctions, telles que par exemple:

♦ le télédiagnostic qui permet de faire remonter les alarmes à un centre de gestion par exemple en cas d'appareils électriques défectueux, de pannes, de dépassements de seuils, etc.

♦ la commande de gradation de l'éclairage selon certains horaires dans le cas de l'éclairage public,

♦ la mise à l'heure de l'horloge locale par exemple dans chaque candélabre d'un éclairage public.

De même, ce système de communication prévoit que chaque interface de commande comporte au moins :

♦ un second module de traitement agencé pour réceptionner des messages codés en provenance de la centrale de commande 20 et fournir une seconde information,

♦ un second module de communication agencé pour émettre des messages codés en direction de la centrale de commande 20, et

♦ un second module de pilotage agencé pour commander, en fonction d'une seconde information issue du second module de traitement, au moins un second interrupteur 42, placé sur le circuit de puissance 2 en série avec le premier interrupteur 22, en position fermée correspondant au "mode puissance" dans laquelle l'appareil électrique A est alimenté en énergie ou en position ouverte correspondant au "mode communication".

Une partie de ces modules est par exemple constituée d'un microcontrôleur 40' dont les fonctions peuvent être étendues.

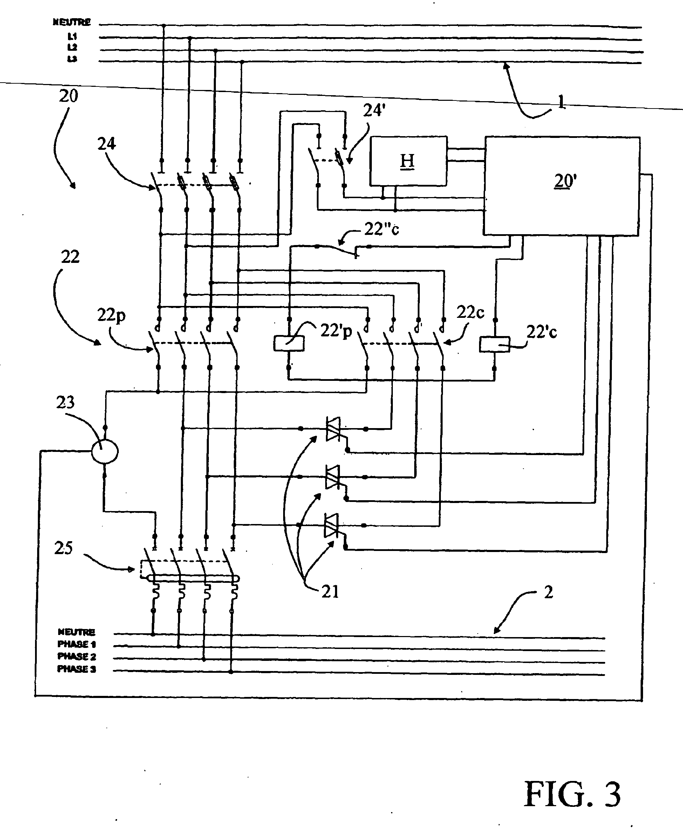

Les figures 3 à 5 illustrent des exemples de circuits électriques permettant de mettre en oeuvre le schéma de principe de la figure 2. Ces circuits électriques ne sont donnés qu'à titre indicatif étant donné que d'autres modes de réalisation peuvent convenir.

La figure 3 représente le câblage de la centrale de commande 20. Le réseau électrique 1 triphasé avec neutre alimente le circuit de puissance 2 par l'intermédiaire d'un sectionneur porte fusible 24 monté en série avec l'interrupteur 22 monté en série avec un disjoncteur différentiel 25. Le circuit de puissance 2 permet d'alimenter les appareils électriques A en courant monophasé pris entre le neutre et une des phases. Le microcontrôleur 20' regroupant une partie des premiers modules de pilotage, de communication, de traitement et le module programmable, de même que l'horloge H, sont alimentés en courant monophasé entre le neutre et une des phases du réseau électrique 1 au travers d'un sectionneur porte fusible 23'. Le premier module de pilotage comporte l'horloge H et l'interrupteur 22 qui est doublé par un premier interrupteur 22p commandé par un relais 22'p pour le "mode puissance" et un second interrupteur 22c commandé par un relais 22'c pour le "mode communication". Ce premier module de pilotage comporte également un interrupteur supplémentaire 22"c monté en série avec le relais 22'p et commandé par le relais 22'c pour ouvrir le circuit alimentant le relais 22'p si le relais 22'c est alimenté. Le premier module de communication comporte trois triacs, un sur chaque phase, monté en série avec le second interrupteur 22c et constituant l'interrupteur 21 de la figure 2. La gâchette de chaque triac est raccordée au microcontrôleur qui commande son état bloqué ou son état passant, dans le but de créer les bits de communication par un signal en tension Uc. Le premier module de traitement comporte un capteur de courant 23 monté en série sur le neutre et relié au microcontrôleur pour détecter les signaux en courant Ic. Le module programmable comporte un protocole de communication sous la forme d'un logiciel dans lequel sont définis au moins la codification des adresses des appareils électriques A et la codification des ordres adressés par la centrale de commande 20 aux interfaces de commande 40, la codification des questions adressées par la centrale de commande 20 aux interfaces de commande 40 et la codification des réponses adressées en retour par les interfaces de commande 40 à la centrale de commande 20. Il peut également comporter des ordres pour passer du mode communication en mode puissance, des ordres de variation de puissance, etc.

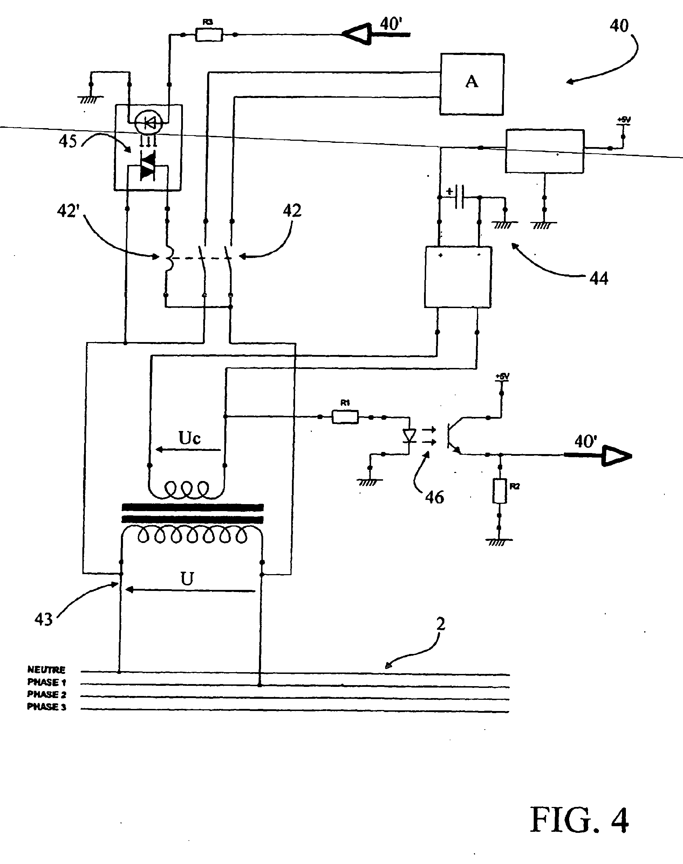

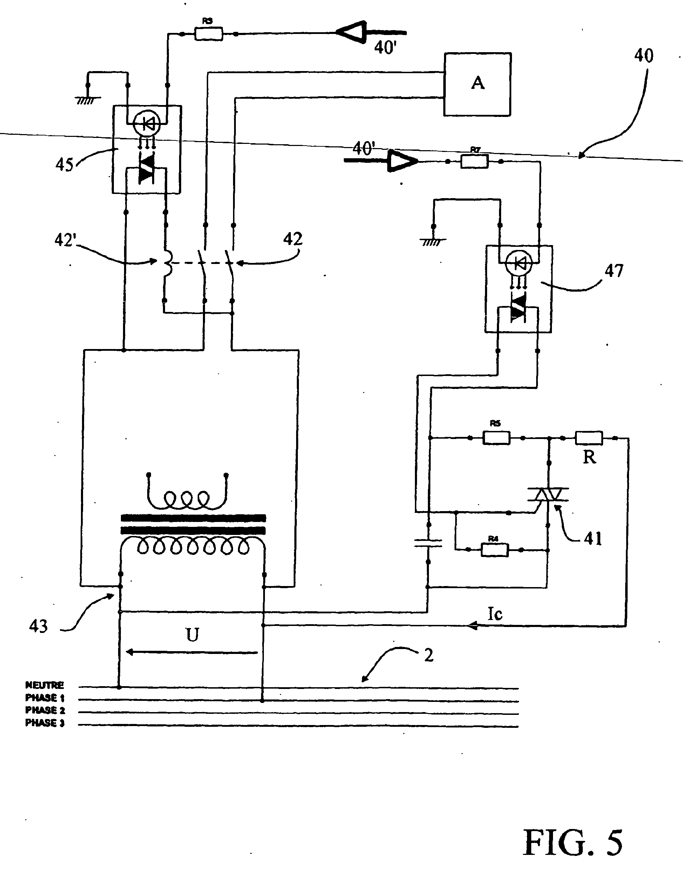

Les figures 4 et 5 représentent le câblage d'une interface de commande 40 associée à un appareil électrique A, la figure 4 représentant la partie réception de signaux et la figure 5 la partie émission de signaux. Le microcontrôleur 40' n'est pas représenté, seules ses entrées et sorties sont schématisées par des flèches. En référence à la figure 4, le microcontrôleur 40' est alimenté en courant continu très basse tension, par exemple 5V, à partir du secondaire d'un transformateur 43 monté en parallèle entre le neutre et une des phases du réseau de puissance 2 et par l'intermédiaire d'un module d'alimentation 44 qui redresse, filtre, régule la tension et crée une masse. Le second module de pilotage comporte l'interrupteur 42 monté en série avec l'appareil électrique A alimenté en courant monophasé entre le neutre et une des phases du circuit de puissance 2 à partir du primaire du transformateur 43. L'interrupteur 42 est commandé par un relais 42' lui-même commandé par un opto-triac 45 couplé au microcontrôleur 40' pour recevoir un signal. A la mise sous tension U, cet interrupteur 42 est en positon ouverte pour autoriser le "mode communication". Si le microcontrôleur 40' détecte un nombre n de périodes normales de la tension U, il commande le passage en "mode puissance" en envoyant un courant dans l'opto-triac 45, qui alimente le relais 42' basculant l'interrupteur 42 en position fermée pour alimenter en énergie l'appareil électrique A. Le second module de traitement comporte un phototransistor 46 alimenté à partir du secondaire du transformateur 43 et transmettant les périodes de la tension U au microcontrôleur 40' par un circuit très basse tension. Le microcontrôleur 40' analyse ces périodes pour en déduire si la centrale de commande 20 veut passer en "mode puissance" ou en "mode communication". En mode communication, il décode le message en bits de tension Uc pour, le cas échéant, y répondre en bits de courant Ic par son second module de communication. En référence à la figure 5, ce second module de communication comporte au moins une résistance R montée en parallèle sur le primaire du transformateur 43 et alimentée par l'interrupteur 41 constitué d'un triac. La gâchette de ce triac est raccordée au microcontrôleur 40' par un opto-triac 46 agencé pour commander l'état bloqué ou l'état passant du triac, dans le but de créer les bits de communication par un signal en courant Ic entre le neutre et la phase du circuit de puissance 2. Ce signal en courant Ic est alors détecté par le capteur de courant 23 et analysé par le premier module de traitement du microcontrôleur 20' de la centrale de commande 20. Pour une résistance R de 220 $\Omega$, le courant Ic est égal à 1 A pour une tension de 220 V. Ce courant Ic sera alors facilement repérable par le capteur de courant 23 sur le réseau de puissance 2 en comparaison avec le très faible courant consommé par les microcontrôleurs 40' des interfaces de commande 40. Au besoin, le premier module de traitement intègre un comparateur agencé pour détecter Ic au-delà d'un seuil Is prédéterminé (comme représenté sur le schéma du signal en courant Ic de la figure 2). Si le signal en courant Ic véhicule un message d'anomalie de fonctionnement de l'appareil électrique A, le microcontrôleur 20' est agencé pour délivrer un signal d'alarme par exemple pour commander l'intervention d'une équipe de maintenance. Les appareils électriques A étant tous repérés par une adresse individuelle, l'identification du lieu de l'intervention en cas de panne est instantanée.

Le choix des opto-triacs 45, 46 et du phototransistor 46 permet d'assurer une isolation galvanique entre le microcontrôleur 40' alimenté en très basse tension et les éléments de puissance, tels que le relais 42', le secondaire du transformateur 43 et la résistance R. D'autres composants électroniques peuvent également convenir.

Il apparaît de cette description que l'invention permet d'atteindre les buts fixés et notamment d'assurer une communication bilatérale entre une centrale de commande et des interfaces de commande associées à des appareils électriques par le biais du circuit de puissance existant et grâce au fait que les trames de communication comportent des bits d'énergie permettant d'alimenter en puissance les interfaces de communication. Le dispositif de commande ainsi obtenu est très simple et économique, ses fonctionnalités sont évolutives et ses paramètres sont modifiables directement à partir de la centrale de commande 20. Le mode de langage étant défini dans un protocole de communication peut, lui aussi, évoluer en fonction des besoins. Un tel dispositif permet la communication à distance avec un ou plusieurs appareils électriques, individuellement ou simultanément. La réponse (Ic) du ou des appareils électriques se retrouvant en totalité sur le neutre, un seul capteur de courant est nécessaire. Ce dispositif permet par conséquent d'obtenir des informations immédiates, fiables, insensibles au micro-coupure du réseau électrique ou aux bruits parasites.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif de commande (10) d'alimentation électrique pour appareils électriques (A) notamment pour candélabres d'éclairage public, comportant au moins une centrale de commande (20) agencée pour alimenter à partir d'un réseau électrique (1) une pluralités d'appareils électriques (A) montés en parallèle sur un circuit de puissance (2), ce dispositif comportant également au moins une interface de commande (40) associée à chaque appareil électrique (A), ladite centrale de commande (20) comportant au moins :

   ♦ un premier module de pilotage agencé pour commander, en fonction d'une première information, au moins un premier interrupteur (22) placé sur le circuit de puissance (2) en position "mode puissance" dans laquelle ledit circuit de puissance (2) alimente en énergie lesdits appareils électriques (A) ou en position "mode communication" dans laquelle ledit circuit de puissance (2) n'alimente pas les appareils électriques (A) et est utilisé pour faire circuler des messages codés autorisant une communication entre la centrale de commande (20) et lesdites interfaces de commande (40) et inversement,
   ♦ un premier module de communication agencé pour émettre des messages codés en direction des interfaces de commande (40),

♦ un premier module de traitement agencé pour réceptionner des messages codés en provenance des interfaces de commande (40), et

♦ un module programmable agencé pour paramétrer au moins lesdits modules de pilotage, de communication et de traitement,

chaque interface de commande (40) comportant au moins :

♦ un second module de traitement agencé pour réceptionner des messages codés en provenance de la centrale de commande (20) et fournir une seconde information,

♦ un second module de communication agencé pour émettre des messages codés en direction de la centrale de commande (20), **caractérisé en ce que** chaque interface de commande comporte en outre au moins

♦ un second module de pilotage agencé pour commander, en fonction d'une seconde information issue du second module de traitement, au moins un second interrupteur (42), placé sur le circuit de puissance (2) en série avec le premier interrupteur (22), en position fermée correspondant au "mode puissance" dans laquelle l'appareil électrique (A) est alimenté en énergie ou en position ouverte correspondant au "mode communication",

et **en ce que** les messages codés émis par ladite centrale de commande (20) sont agencés pour alimenter en énergie lesdites interfaces de commande (40).

2. Dispositif selon la revendication 1, **caractérisé en ce que** le premier module de pilotage comporte des moyens agencés pour fournir ladite première information, ces moyens étant choisis parmi le groupe comprenant une horloge (H), un détecteur de luminosité, un récepteur radio pour recevoir ladite première information à distance.

3. Dispositif selon la revendication 1, **caractérisé en ce que** le premier module de pilotage comporte au moins deux premiers interrupteurs (22p, 22c) montés en parallèle, l'un des interrupteurs (22p) étant dédié au "mode puissance" et l'autre interrupteur (22c) au "mode communication".

4. Dispositif selon la revendication 1, **caractérisé en ce que** les messages sont codés en utilisant le système binaire formé de bits égaux à 0 ou 1, rassemblés en trames sur une base de temps correspondant à la fréquence du réseau électrique (1).

5. Dispositif selon la revendication 4, **caractérisé en ce que** les trames comportent au moins l'adresse de l'appareil électrique (A) à qui est destiné le message et un code correspondant à un ordre, une donnée, une question.

6. Dispositif selon la revendication 4, **caractérisé en ce que** les messages codés émis par le premier module de communication comportent des bits de puissance égaux à 1 agencés pour alimenter en énergie lesdites interfaces de commande (40).

7. Dispositif selon la revendication 1, **caractérisé en ce que** le premier module de communication comporte au moins un premier interrupteur électronique (21) placé sur le circuit de puissance (2), ce module étant agencé pour commander ledit premier interrupteur électronique (21) en mode passant ou en mode bloqué de manière à laisser ou à supprimer des périodes dans la tension (U) du circuit de puissance (2) et former par un signal en tension (Uc) respectivement des bits égaux à 1 ou 0.

8. Dispositif selon la revendication 1, **caractérisé en ce que** le premier module de traitement comporte au moins un capteur de courant (23) placé sur le neutre du réseau électrique (1) pour détecter des signaux en courant (Ic) provenant des interfaces de commande (40).

9. Dispositif selon la revendication 1, **caractérisé en ce que** chaque interface de commande (40) comporte au moins un transformateur (43) dont le secondaire est couplé à un module d'alimentation (44) agencé pour délivrer aux dits seconds modules une très basse tension continue.

10. Dispositif selon la revendication 1, **caractérisé en ce que** le second module de traitement est agencé pour extraire les périodes positives de la tension (U) du circuit de puissance (2) et en déduire le contenu des messages codés en provenance de la centrale de commande (40) pour fournir ladite seconde information au second module de pilotage ou de communication.

**11.** Dispositif selon la revendication 1, **caractérisé en ce que** le second module de communication comporte au moins un circuit résistif (R) monté en parallèle sur le circuit de puissance (2) et un second interrupteur électronique (41), ce module étant agencé pour commander ledit second interrupteur électronique (41) en mode passant ou en mode bloqué de manière à générer ou non un signal en courant retour (Ic) dans le circuit de puissance (2) et former respectivement des bits égaux à 1 ou 0.

**12.** Dispositif selon la revendication 1, **caractérisé en ce que** ladite centrale de commande (20) comporte au moins un microcontrôleur (20') associé aux dits premiers modules et **en ce que** les interfaces de commande (40) comporte au moins un microcontrôleur (40') associé aux dits seconds modules.

**Claims**

**1.** Power supply control device (10) for electrical devices (A), in particular lamps for public lighting, comprising at least a central control unit (20) arranged to supply, from an electrical network (1), a plurality of electrical devices (A) mounted in parallel on a power circuit, (2), this device also comprises at least a control interface (40) associated with each electrical device (A), said central control unit (20) comprising at least:

♦ a first driving module arranged to switch, in function of a first information, at least a first switch (22) located on the power circuit (2) to the "power mode" position, in which said power circuit (2) supplies energy to said electrical devices (A) or to the "communication mode" position, in which said power circuit (2) does not supply energy to said electrical devices (A) and is used to circulate encoded messages allowing a communication between the central control unit (20) and said control interfaces (40) and vice-versa,
♦ a first communication module arranged to send encoded messages to the control interfaces (40),
♦ a first processing module arranged to receive encoded messages coming from the control interfaces (40), and
♦ a programmable module arranged to parameterize at least said driving, communication and processing modules,

each control interface (40) comprising at least:

♦ a second processing module arranged to receive encoded messages coming from the central control unit (20) and to supply a second information,
♦ a second communication module arranged to send encoded messages to the central control unit (20), **characterised in that** each control interface includes, in addition, at least
♦ a second driving module arranged to switch, in function of a second information coming from the second processing module, at least a second switch (42), located serially with the first switch (22) on the power circuit (2), to the closed position corresponding to the "power mode", in which the electrical device (A) is supplied with energy, or to the opened position corresponding to the "communication mode",

and **in that** the encoded messages sent by said central control unit (20) are arranged to supply said control interfaces (40) with energy.

**2.** Device according to claim 1, **characterised in that** the first driving module comprises means arranged to provide said first information, these means being chosen from the group comprising a clock (H), a luminosity sensor, a radio receiver for a remote reception of said first information.

**3.** Device according to claim 1, **characterised in that** the first driving module comprises at least two first switches (22p, 22c) mounted in parallel, one of the switches (22p) being intended for the "power mode" and the other switch (22c) for the "communication mode".

**4.** Device according to claim 1, **characterised in that** the messages are encoded using the binary system made of bits equal to 0 or 1, grouped in frames on a time base corresponding to the frequency of the electrical network (1).

**5.** Device according to claim 4, **characterised in that** the frames comprise at least the address of the electrical device (A) whom the message is intended for and a code corresponding to an instruction, a data, a question.

**6.** Device according to claim 4, **characterised in that** the encoded messages emitted by the first communication module comprise power bits equal to 1 arranged to supply said control interfaces (40) with energy.

7. Device according to claim 1, **characterised in that** the first communication module comprises at least a first electronic switch (21) placed on the power circuit (2), this module being arranged to control said first electronic switch (21) in conducting mode or in blocking mode in order to leave or to suppress periods in the voltage (U) of the power circuit (2) and form, using a voltage signal (Uc) bits equal respectively to 1 or 0.

8. Device according to claim 1, **characterised in that** the first processing module comprises at least one current sensor (23) located on the neutral of the electrical network (1) to detect current signals (Ic) coming from the control interfaces (40).

9. Device according to claim 1, **characterised in that** each control interface (40) comprises at least one transformer (43) whose secondary is coupled to a supply module (44) arranged to supply said second modules with extra low direct voltage.

10. Device according to claim 1, **characterised in that** the second processing module is arranged to extract the positive periods of the voltage (U) of the power circuit (2) and to derive from this the content of the encoded messages coming from the central control unit (40) to provide said second information to the second control or communication module.

11. Device according to claim 1, **characterised in that** the second communication module comprises at least one resistive circuit (R) mounted in parallel on the power circuit (2) and a second electronic switch (41), this module being arranged to control said second electronic switch (41) in conducting mode or in blocking mode so as to generate or not a feedback current signal (Ic) in the power circuit (2) and to form respectively bits equal to 1 or 0.

12. Device according to claim 1, **characterised in that** said central control unit (20) comprises at least one microcontroller (20') associated to said first modules and **in that** the control interfaces (40) comprise at least one microcontroller (40') associated to said second modules.

## Patentansprüche

1. Elektrische Speisungssteuerungsvorrichtung (10) für Elektrogeräte (A), insbesondere Lampen für eine öffentliche Beleuchtung, bestehend aus mindestens einer Steuerzentrale (20), die angeordnet ist, um von einem Stromnetz (1) aus eine Vielfalt parallel an einen Leistungskreis (2) angeschlossener Elektrogeräte (A) zu speisen, wobei diese Vorrichtung ebenfalls mindestens eine mit jedem Elektrogerät (A) verbundene Steuer-Schnittstelle (40) beträgt, wobei die besagte Steuerzentrale (20) mindestens :

   ♦ ein erstes Steuermodul, das ausgelegt ist, um in Abhängigkeit einer ersten Information mindestens einen ersten auf dem Leistungskreis (2) befindlichen Schalter (22) in die "Leistungsmodus"-Stellung zu schalten, in der das besagte Leistungsnetz (2) die besagten Elektrogeräte (A) mit Energie speist, oder in die "Kommunikationsmodus"-Stellung zu schalten, in der der besagte Leistungskreis (2) die Elektrogeräte (A) nicht speist und dazu verwendet wird, kodierte Meldungen zirkulieren zu lassen, die eine Kommunikation zwischen der Steuerzentrale (20) und den besagten Steuer-Schnittstellen (40) und umgekehrt erlauben,
   ♦ ein erstes Kommunikations-Modul, das ausgelegt ist, um kodierte Meldungen an die Steuer-Schnittstellen (40) zu senden,
   ♦ ein erstes Verarbeitungs-Modul, das ausgelegt ist, um von den Steuer-Schnittstellen (40) kommende kodierte Meldungen zu empfangen, und
   ♦ ein programmierbares Modul, das ausgelegt ist, um mindestens die besagten Steuer-, Kommunikations- und Verarbeitungsmodule zu parametrieren,

   beträgt, wobei jede Steuer-Schnittstelle (40) mindestens:

   ♦ ein zweites Verarbeitungs-Modul, das ausgelegt ist, um von der Steuerzentrale (20) kommende kodierte Meldungen zu empfangen und eine zweite Information zu liefern,
   ♦ ein zweites Kommunikations-Modul, das ausgelegt ist, um kodierte Meldungen an die Steuerzentrale (20) zu senden, **dadurch gekennzeichnet, dass** jede Steuer-Schnittstelle außerdem mindestens
   ♦ ein zweites Steuermodul beträgt, das ausgelegt ist, um in Abhängigkeit einer zweiten, vom zweiten Verarbeitungsmodul kommenden Information mindestens einen zweiten, seriell mit den ersten Schalter (22) auf dem Leistungskreis (2) angeordneten Schalter (42) in die dem "Leistungsmodus' entsprechende geschlossene Stellung, in der das Elektrogerät (A) gespeist wird oder in die dem "Kommunikationsmodus" entsprechende offene Stellung zu schalten,

beträgt, und dadurch, dass die von der besagten Steuerzentrale (20) gesendeten kodierten Meldungen ausgelegt sind, um die besagten Steuer-Schnittstellen (40) mit Energie zu speisen.

2. Vorrichtung nach Anspruch 1, **dadurch gekennzeichnet, dass** das erste Steuermodul Mittel beträgt, die ausgelegt sind, um die besagte erste Information zu liefern, wobei diese Mittel in der Gruppe gewählt werden, die eine Uhr (H), einen Helligkeits-Sensor, einen Funkempfänger für den Femempfang der besagten ersten Information umfasst.

3. Vorrichtung nach Anspruch 1, **dadurch gekennzeichnet, dass** das erste Steuermodul mindestens zwei parallel angeordnete erste Schalter (22p, 22c) beträgt, wobei einer der Schalter (22p) für den "Leistungsmodus" und der andere Schalter (22c) für den "Kommunikationsmodus" bestimmt ist.

4. Vorrichtung nach Anspruch 1, **dadurch gekennzeichnet, dass** die Meldungen kodiert werden mittels Verwendung des Binärsystems, welches aus Bits gleich 0 oder 1 besteht, die in Frames auf einer der Frequenz des Stromnetzes (1) entsprechenden Zeitbasis zusammengestellt werden.

5. Vorrichtung nach Anspruch 4, **dadurch gekennzeichnet, dass** die Frames mindestens die Adresse des Elektrogeräts (A), für das die Meldung bestimmt ist, und einen einem Befehl, einem Wert, einer Abfrage entsprechenden Kode betragen.

6. Vorrichtung nach Anspruch 4, **dadurch gekennzeichnet, dass** die von dem ersten Kommunikations-Modul gesendeten kodierten Meldungen Leistungs-Bits mit dem Wert 1 betragen, die ausgelegt sind, um die besagten Steuer-Schnittstellen (40) mit Energie zu speisen.

7. Vorrichtung nach Anspruch 1, **dadurch gekennzeichnet, dass** das erste Kommunikations-Modul mindestens einen ersten, auf dem Leistungskreis (2) angeordneten elektronischen Schalter (21) beträgt, wobei dieses Modul ausgelegt ist, um den besagten ersten elektronischen Schalter (21) in den Durchlassmodus oder in den Sperrmodus zu schalten, um Perioden in der Spannung (U) des Leistungskreises (2) zu lassen oder zu unterdrücken und mit einem Spannungs-Signal (Uc) Bits mit einem Wert von 1 bzw. 0 zu bilden.

8. Vorrichtung nach Anspruch 1, **dadurch gekennzeichnet, dass** das erste Verarbeitungs-Modul mindestens einen auf dem Neutralleiter des Stromnetzes (1) angeordneten Strom-Sensor (23) beträgt um von den Steuer-Schnittstellen (40) kommende Strom-Signale (Ic) zu erfassen.

9. Vorrichtung nach Anspruch 1, **dadurch gekennzeichnet, dass** jede Steuer-Schnittstelle (40) mindestens einen Transformator (43) beträgt, dessen Sekundärwicklung mit einem Speisungsmodul (44) gekoppelt ist, das ausgelegt ist, um die besagten zweiten Module mit einer sehr niedrigen Gleichspannung zu versorgen.

10. Vorrichtung nach Anspruch 1, **dadurch gekennzeichnet, dass** das zweite Verarbeitungs-Modul ausgelegt ist, um die positiven Perioden der Spannung (U) des Leistungskreises (2) auszulesen und davon den Inhalt der von der Steuerzentrale (40) kommenden kodierten Meldungen abzuleiten, um dem zweiten Steuer- oder Kommunikations-Modul die besagte zweite Information zu liefern.

11. Vorrichtung nach Anspruch 1, **dadurch gekennzeichnet, dass** das zweite Kommunikations-Modul mindestens einen parallel auf dem Leistungskreis (2) angeordneten resistiven Stromkreis (R) und einen zweiten elektronischen Schalter (41) beträgt, wobei dieses Modul ausgelegt ist, um den besagten zweiten elektronischen Schalter (41) in den Durchlassmodus oder in den Sperrmodus zu schalten, um im Leistungskreis (2) ein Strom-Rücksignal (Ic) zu erzeugen bzw. nicht zu erzeugen und Bits gleich 1 bzw. 0 zu bilden.

12. Vorrichtung nach Anspruch 1, **dadurch gekennzeichnet, dass** die besagte Steuerzentrale (20) mindestens einen mit den besagten ersten Modulen verbundenen Mikrocontroller (20') beträgt, und dadurch, dass die Steuer-Schnittstellen (40) mindestens einen mit den besagten zweiten Modulen verbundenen Mikrocontroller (40') betragen.

FIG. 1

FIG. 2

NEUTRE
L1
L2
L3

20

1

24'

24

H

20'

22"c

22

22p

22'p

22c

22'c

23

21

25

2

NEUTRE
PHASE 1
PHASE 2
PHASE 3

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1286570 A
- FR 2851048 A
- EP 0758837 A
- GB 2335334 A